# EUROPEAN PATENT SPECIFICATION

(11) **EP 1 156 252 B1**
(45) Date of publication and mention of the grant of the patent: **12.05.2004**
(21) Application number: 01107249.3
(22) Date of filing: 23.03.2001
(51) Int. Cl.: F16L 11/08

(54) **Flexible hose, in particular for watering applications**
Schlauch, insbesondere für wässernanwendungen
Tuyau flexible, en particulier pour l'arrosage

(30) Priority: 18.05.2000 IT PN000030
(43) Date of publication of application: 21.11.2001
(73) Proprietor: UNIFLEX UTILTIME S.p.A., I-33086 Montereale Valcellina (Pordenone) (IT)
(72) Inventor: Ferrer, Horacio, 33080 Porcia, Pordenone (IT); Borghese, Alladino, 33086 Montereale Valcellina, Pordenone (IT); Zanetti, Paul, 33086 Montereale Valcellina, Pordenone (IT)
(74) Representative: Giugni, Valter

(56) References cited:
- EP-A- 0 740 098
- EP-A- 0 794 377
- WO-A-97/41719
- DE-A- 19 727 142
- DE-A- 19 803 656
- US-A- 3 633 629

## Description

The present invention refers to a flexible hose made of plastic or rubber material and reinforced with textile layers, for the distribution of fluids under pressure, in particular adapted for use in connection with watering installations.

Hoses of the above mentioned kind are known since a long time now in the art and can be subdivided into two main categories, according to the type of textile reinforcement used.

A first type of hoses of this kind is the so-called "braided" one with a net-like textile reinforcement, in which an inner tubular layer of plastic material is reinforced by a series of parallel, regularly spaced yarns wound spirally around said inner tubular layer with a pre-determined inclination with respect to the axis of the hose. On these yarns there are then superimposed a further array of yarns that are wound spirally with a symmetrical inclination with respect to the former ones, in such a manner as to form a regular lozengewise-meshed net-like pattern. Such a textile net is then sealed and locked in place by an outer layer of plastic material (eg. as disclosed in US 4,308,896). This type of hose features a good resistance to the inner pressure generated by the fluid, but its flexibility is rather low, especially when the hose is under operating conditions.

A second type of hoses of the afore mentioned kind is the one involving a so-called tricot-type reinforcement, in which between the inner and the outer tubular layers of plastic material there is inserted a layer of interwoven yarns. The most widely used type of tricot of this kind is the one obtained by knitting in a chain-like manner, ie. the one in which each yarn forms the knitted fabric by interlacing with one or more yarns on its right and one or more yarns on its left. This solution confers a greater flexibility to the hose, since the knitted fabric tends to yield as the diameter of the hose increases owing to the action of the inner pressure of the fluid. However, under actual operating conditions the hose is in this case subject to a torsional effect, ie. has a definite tendency to twisting, that is due to the spiral-like pattern of the warp rows which, as opposed to the substantially longitudinal pattern of the weft rows, generate an unbalanced reaction, with respect to the axis of the hose, to the increasing inner pressure of the fluid.

The problem of such a twisting of the hose is certainly more annoying than the one brought about by a reduced flexibility, so that high-quality hoses should of course be free of such a drawback.

In view of solving this problem, the European patent EP 0 623 776 proposes a hose with a single layer of knitted fabric in which two rows of meshes are woven which are inclined in mutually opposite directions, with the same inclination angle with respect to the axis of the hose.

However, the hose with a knitted-type textile reinforcement requires a considerable thickness of the wall of plastic material and this translates into not only higher manufacturing costs, but also a specific gravity (ie. weight per linear meter) of the hose that is certainly noticeable and makes it quite fatiguing to use the same hose, especially if it is rather long.

DE 197 27 142 discloses a flexible hose, mainly for water sprinkling comprising an inner tubular layer and an outer tubular layer of plastic material or rubber, between these outer and inner layers there being interposed two reinforcing layers of textile material wound in a spiral-like manner with respect to the axis of the hose separated by an axial micro-layer of plasticised PVC. The first reinforcing layer being a reinforcing braided polyester fabric, and the second layer being a knitted polyester fabric.

It has been found that the use of two textile layers, preferably separated from each other both of which of the so-called tricot or knitted type, enables not only manufacturing costs to be reduced, but also a kind of hose to be provided that is free from any twisting or torsional effects and offers good properties in terms of flexibility, and has a lower weight per linear meter. In fact, by using such a double textile layer, the spacing of the yarns and the width of the meshes of the textile layers can be increased to a considerable extent, under resulting reduction in the usage of both yarn and plastic material, while at the same time enabling the hose to be produced at a much higher speed.

According to the present invention, these and further features are reached in a hose embodying the characteristics as recited in the appended claims.

The features and advantages of the present invention will anyway be more readily and clearly understood from the description that is given below by way of non-limiting example with reference to the accompanying drawings, in which:
- Figure 1 is a cut-away perspective view of a length of hose made according to the present invention;
- Figure 2 is a cross-sectional view of the hose illustrated in Figure 1;
- Figure 3 is a cut-away perspective view of a length of hose made according to DE 197 27 142 A.

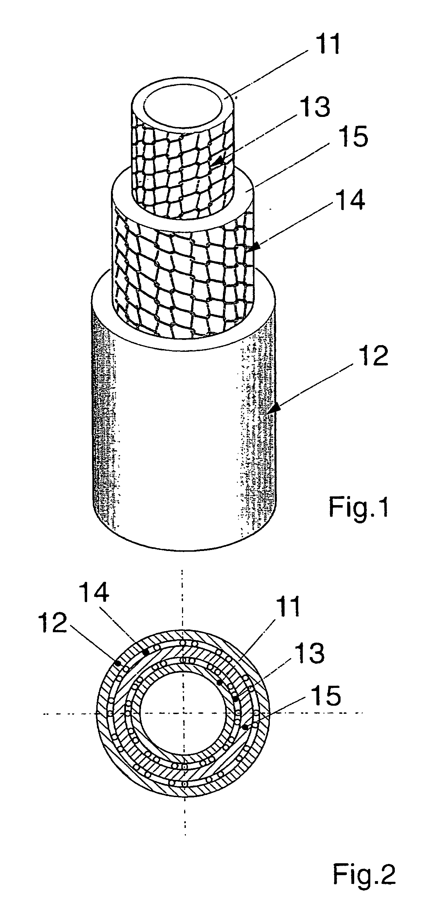

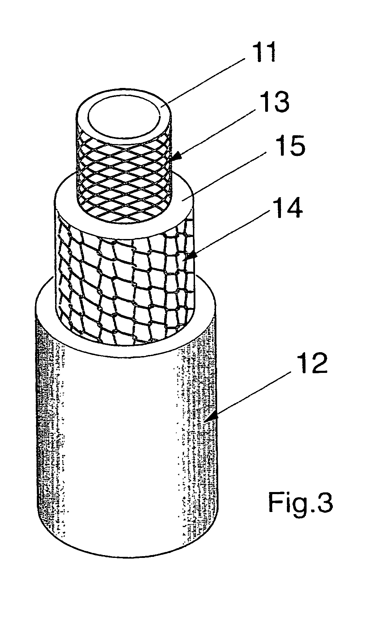

With reference in particular to Figures 1 and 2, these can be noticed to schematically illustrate perspective and cross-sectional views, respectively, of a length of hose comprising an inner tubular layer 11 of plastic material or rubber, as well as an outer tubular layer 12, which is also made of plastic material or rubber.

Around the inner tubular layer 11 there is wound in a spiral-like manner a first reinforcement textile layer 13 with chain-like or knitted meshes of the tricot type. This textile reinforcement has its warp rows that are inclined with respect to the axis of the hose, while the weft rows are substantially parallel to the axis of the hose.

According to the present invention, a second reinforcement textile layer 14 is wound in a spiral-like manner over said first textile layer 13. Even this second textile layer 14 is formed with chain-like or knitted meshes of the tricot type, but has its warp rows that are inclined in the opposite direction with respect to the ones of the first layer 13. In a preferred manner, the two textile layers 13 and 14 are separated from each other by a thin layer of plastic material or rubber 15.

It readily appears that the two textile layers 13 and 14, thanks to the crossed-mesh conformation thereof, are capable of compensating for their respective tendency to twist when the hose is being used, ie. is full of fluid under pressure. As a result, the hose is free of any torsional effect.

Furthermore, the use of two textile layers, with the combination of the respective mechanical strength properties as far as the resistance to the stresses imparted under operating conditions, enables the pitch, ie. width of the meshes to be increased to a considerable extent, thereby reducing the usage of yarn and increasing the rate at which the same hose can actually be produced.

The fact should also be in particular stressed that, owing again to such a use of two reinforcement textile layers, it is possible for the wall thickness of the tubular layers 11 and 12 to be greatly reduced with respect to the one usually required in prior-art hoses. This of course leads to marked savings in the usage of plastic material or rubber in the production of the hose, thereby greatly benefiting not only the final cost of the hose, but also the weight per linear meter of the same.

A further important advantage offered by the hose according to the present invention lies in the fact that it practically does away with one of the weak points of currently used hoses, ie. the strength of the connection zones thereof. It is in fact generally known that the end portions of the hoses have to be connected to the fluid supply member (usually a cock, tap or the like) on the one side, and to the fluid delivery or flow adjustment member (a sprinkler, a jet or the like) on the other side. These connections are carried out by inserting the end portion of the hose on to an attachment mandrel and then causing it to expand. The hose is then tightened by means of clamps or proper fittings that cause the wall of the hose to undergo a strong radial compression in view of ensuring tightness when the hose is under pressure.

As a result, the pressure of the fluid flowing inside the hose causes an expansion to take place in the portion of hose that is immediately adjacent to the zone of connection thereof. In the course of time, such an effect may even lead to a breakdown of the same hose. In the case of the hose according to the present invention, the double reinforcement textile layer ensures a greater strength of the hose just in correspondence of these connection portions thereof.

It may therefore be concluded that, according to the present invention, a flexible hose is provided which is free of torsional or twisting effects, is much lighter, stronger and low-cost than the corresponding types of hoses currently available on the market.

Figure 3 illustrates a hose similar to that described in DE 197 27 142 A.

In this type of hose, the inner textile layer 13 is of the grid or net type, rather than a chain or knitted one, with still sensibly greater pitches or widths, as far as both threads and net meshes are concerned, than those used in the corresponding types of hoses.

## Claims

1. Flexible hose, in particular for use in connection with watering installations, comprising an inner tubular layer and an outer tubular layer of plastic material or rubber, between these two layers there being interposed at least a layer of reinforcement textile material wound in a spiral-like manner with respect to the axis of the hose, **characterized in that** between the inner tubular layer (11) and the outer tubular layer (12) there is provided the insertion of two superimposed textile layers (13, 14) both made with chain-like knitted meshes of the tricot type, in which the inclination of the meshes of a layer with respect to the axis of the hose is opposite to the inclination of the meshes of the other layer.

2. Flexible hose according to any of the preceding claims, **characterized in that** the two reinforcement textile layers (13, 14) are separated from each other by a further layer of plastic material (15).

## Patentansprüche

1. Flexibler Schlauch, insbesondere zur Verwendung in Verbindung mit Bewässerungseinrichtungen, umfassend eine innere röhrenförmige Schicht und eine äußere röhrenförmige Schicht aus Kunststoffmaterial oder Gummi, wobei zwischen diesen Schichten wenigstens eine Schicht aus einem Verstärkungstextilmaterial angeordnet ist, die in Bezug zur Schlauchachse spiralförmig gewickelt ist, **dadurch gekennzeichnet, dass** zwischen der inneren röhrenförmigen Schicht (11) und der äußeren röhrenförmigen Schicht (12) der Einschub von zwei übereinander liegenden Textilschichten (13, 14) vorgesehen ist, die beide mit kettenartig gestrickten Maschen vom Gewebetyp gefertigt sind, bei welchen die Neigung der Maschen der Schicht bezüglich der Schlauchachse der Neigung der Maschen der anderen Schicht entgegengesetzt ist.

2. Flexibler Schlauch nach einem der vorherigen Ansprüche, **dadurch gekennzeichnet, dass** die beiden Verstärkungstextilschichten (13, 14) voneinander durch eine weitere Schicht aus Kunststoffmaterial (15) getrennt sind.

## Revendications

1. Tuyau flexible, destiné en particulier pour une utilisation en association avec des installations d'arrosage, comprenant une couche tubulaire intérieure et une couche tubulaire extérieure en matière plastique ou en caoutchouc et, intercalée entre ces deux couches, au moins une couche en un matériau textile de renforcement enroulée en spirale par rapport à l'axe du tuyau, **caractérisé en ce que**, entre la couche tubulaire intérieure (11) et la couche tubulaire extérieure (12), il est prévu d'insérer deux couches textiles superposées (13, 14) toutes deux composées de mailles en chaîne du type tricot, dans lesquelles l'inclinaison des mailles d'une couche par rapport à l'axe du tuyau est opposée à l'inclinaison des mailles de l'autre couche.

2. Tuyau flexible selon la précédente revendication, **caractérisé en ce que** les deux couches textiles de renforcement (13, 14) sont séparées l'une de l'autre par une couche supplémentaire en matière plastique (15).
